# EUROPÄISCHE PATENTSCHRIFT

(11) **EP 4 264 698 B1**
(45) Veröffentlichungstag und Bekanntmachung des Hinweises auf die Patenterteilung: **18.09.2024**
(21) Anmeldenummer: 21824403.6
(22) Anmeldetag: 13.12.2021
(51) Int. Cl.: H01M 8/0234, D04H 1/4242, D04H 1/43, D04H 1/492

(54) **GASDIFFUSIONSANLAGE MIT HOHER REINHEIT**
GAS DIFFUSION SYSTEM WITH HIGH PURITY
COUCHE DE DIFFUSION DE GAZ DE GRANDE PURETÉ

(30) Priorität: 18.12.2020 DE 102020134219
(43) Veröffentlichungstag der Anmeldung: 25.10.2023
(73) Patentinhaber: Carl Freudenberg KG, 69469 Weinheim (DE)
(72) Erfinder: BOCK, Achim, 69469 Weinheim (DE); KLEIN, Kristof, 69469 Weinheim (DE); RAKOUSKY, Christoph, 64372 Ober-Ramstadt (DE); BARSCH, Hannes, 69123 Heidelberg (DE); HIRN, Klaus, 69493 Hirschberg (DE); WAGNER, Klaus-Dietmar, 68542 Heddesheim (DE)
(86) Internationale Anmeldenummer: PCT/EP2021/085452
(87) Internationale Veröffentlichungsnummer: WO 2022/128895

(56) Entgegenhaltungen:
- DE-A1- 102006 060 932
- US-A1- 2003 182 730
- US-A1- 2019 165 379

## Beschreibung

Die vorliegende Erfindung betrifft eine Gasdiffusionslage mit hoher Reinheit, und eine Brennstoffzelle, die eine solche Gasdiffusionslage enthält.

### HINTERGRUND DER ERFINDUNG

Brennstoffzellen nutzen die chemische Umsetzung eines Brennstoffs, insbesondere von Wasserstoff, mit Sauerstoff zu Wasser, um elektrische Energie zu erzeugen. In Wasserstoff-Sauerstoff-Brennstoffzellen wird Wasserstoff oder ein wasserstoffhaltiges Gasgemisch der Anode zugeführt, wo eine elektrochemische Oxidation unter Abgabe von Elektronen stattfindet (H₂ → 2 H⁺ + 2 e⁻). Über eine Membran, welche die Reaktionsräume gasdicht voneinander trennt und elektrisch isoliert, erfolgt ein Transport der Protonen aus dem Anodenraum in den Kathodenraum. Die an der Anode bereitgestellten Elektronen werden über einen äußeren Leiterkreis der Kathode zugeleitet. Der Kathode wird Sauerstoff oder ein sauerstoffhaltiges Gasgemisch zugeführt, wobei eine Reduktion des Sauerstoffs unter Aufnahme der Elektronen stattfindet. Die dabei gebildeten Sauerstoffanionen reagieren mit den über die Membran transportierten Protonen unter Bildung von Wasser (1/2 O₂ + 2 H⁺ + 2 e⁻ → H₂O).

Für viele Anwendungen, speziell im automobilen Antriebsstrang, werden Niedertemperatur-Protonenaustauschmembran-Brennstoffzellen (PEMFC, proton exchange membrane fuel cells, auch als polymer electrolyte membrane fuel cells bezeichnet) eingesetzt, deren Kernstück eine Polymer-ElektrolytMembran (PEM) ist, die nur für Protonen (bzw. Oxoniumionen H₃O⁺) und Wasser durchlässig ist und das Oxidationsmittel, im Allgemeinen Luftsauerstoff, räumlich vom Reduktionsmittel trennt. Auf die gasdichte, elektrisch isolierende, protonenleitende Membran ist auf der Anoden- und Kathodenseite eine Katalysatorschicht aufgebracht, die die Elektroden ausbildet und die in der Regel Platin als katalytisch aktives Metall enthält. In den Katalysatorschichten laufen die eigentlichen Redoxreaktionen und Ladungstrennungen ab. Membran und Katalysatorschichten bilden eine Einheit, die auch als CCM (catalyst coated membrane) bezeichnet wird. Auf beiden Seiten der CCM befindet sich eine Gasdiffusionslage (GDL), die den Zellaufbau stabilisiert und Transport- und Verteilerfunktionen für Reaktionsgase, Wasser, Wärme und Strom übernimmt. Membran, Elektroden und Gasdiffusionslage bilden die Membran-Elektroden-Einheit (MEA, membrane electrode assembly). Zwischen den Membran-Elektroden-Einheiten sind Strömungsverteilerplatten (sogenannte Bipolarplatten) angeordnet, die Kanäle zur Versorgung der angrenzenden Kathode und Anode mit Prozessgasen sowie in der Regel zusätzlich innenliegende Kühlkanäle aufweisen.

Den zwischen den Strömungsverteilerplatten und den Katalysatorschichten befindlichen Gasdiffusionslagen kommt eine wesentliche Bedeutung für die Funktion und Leistungsfähigkeit der Brennstoffzelle zu. So müssen die in den Elektrodenreaktionen verbrauchten und entstehenden Prozesskomponenten durch die Gasdiffusionslage transportiert und von der makroskopischen Struktur der Strömungsverteilerplatten/Bipolarplatten auf die mikroskopische Struktur der Katalysatorschichten homogen verteilt werden. Die in den Halbzellenreaktionen gebildeten und verbrauchten Elektronen müssen mit möglichst geringem Spannungsverlust zu den Strömungsverteilerplatten geleitet werden. Die bei der Reaktion gebildete Wärme muss zum Kühlmittel in den Strömungsverteilerplatten abgeführt werden, so dass die Materialien der GDL auch über ausreichende Wärmeleitfähigkeit verfügen müssen. Zudem muss die GDL auch als mechanischer Ausgleich zwischen der makrostrukturierten Strömungsverteilerplatte und den Katalysatorschichten wirken.

Gasdiffusionslagen für Brennstoffzellen bestehen typischerweise aus einem Kohlefaser-Substrat, welches üblicherweise mit Fluor-Polymeren (z. B. PTFE) hydrophob ausgerüstet ist und anschließend mit einer mikroporösen Lage (MPL) flächig beschichtet wird. Die MPL besteht in der Regel aus einem fluorhaltigen Polymer als Binder (z. B. PTFE) sowie einem porösen und elektrisch leitfähigen Kohlenstoffmaterial (z. B. Ruß oder Graphit-Pulver). Als Kohlefaser-Substrate für die GDL werden aktuell die drei folgenden Materialien eingesetzt:
- Kohlefaser-Papiere (nassgelegte und chemisch gebundene Kohlefaser-Vliesstoffe, mit chemischen Bindern, die karbonisiert werden),
- Kohlefaser-Gewebe (z. B. aus Garnen aus oxidierten aber noch nicht karbonisierten Polyacrylnitril-Fasern, die nach dem Weben karbonisiert bzw. graphitisiert werden),
- Kohlefaser-Vliesstoffe (z.B. trockengelegte, kardierte und Wasserstrahlverfestige Vliesstoffe aus oxidiertem Polyacrylnitril, die anschließend dickenkalibriert und karbonisiert werden).

Es ist bekannt, dass Brennstoffzellen durch den Eintrag von Fremdionen, die nicht an den Elektrodenprozessen beteiligt sind, kontaminiert werden können.

So wurde beispielsweise der Einfluss der Materialien der Bipolarplatten und der aus diesen in die MEA der Brennstoffzelle eingetragenen Kationen und Anionen auf die Zellleistung untersucht. Weitere Quellen, speziell für metallische Kationen, sind Emissionen aus den übrigen Werkstoffen der Zelle, den Systemkomponenten wie Tank, Wärmetauscher, Rohrleitungen, etc., dem Luftzuführstrom zur Kathode und Verunreinigungen des Wasserstoffs durch Herstellung oder Transport. Ein mögliches Problem eingebrachter metallischer Ionen besteht darin, dass diese von der Elektrolytmembran leicht aufgenommen werden können. Grund hierfür ist die starke Affinität der Metallkationen zu den Sulfonsäuregruppen der perfluorierten Kationenaustauscher-Membran, die in der Regel größer ist als die Affinität der Protonen zu den Sulfonsäuregruppen.

Es wurde nun gefunden, dass auch die GDL einen Anteil an der Beladung der MEA mit Fremdionen haben kann. Es besteht daher ein Bedarf an Gasdiffusionslagen, die nur sehr geringe Konzentrationen an Ionen, speziell Metallkationen, aufweisen sowie an Verfahren zu ihrer Herstellung. Die GDL sollen speziell eine geringe Konzentrationen an Kationen aufweisen, wie sie üblicherweise in Wasser für technische Anwendungen enthalten sind, wie Calcium-, Magnesium-, Natrium- und Kaliumionen. Dabei sollen die übrigen mechanischen Eigenschaften der GDL nicht nachteilig verändert werden.

Zur Herstellung von Kohlefaservliesstoffen können Vliese aus Carbonfasern oder Carbonfaser-Precursoren einer Verfestigung durch Einwirken von wasserhaltigen Fluidstrahlen unterzogen werden. Derartige Verwirbelungsverfahren (Spunlace-Verfahren) zur Vliesverfestigung mit Fluidstrahlen und -strömen, einschließlich der Verwirbelung mit überhitzten Dampfstrahlen, sind dem Fachmann bekannt. Eine spezielle Methode zur mechanischen Verfestigung von Vliesstoffen ist die Wasserstrahlverfestigung, bei der Wasser mit einem erhöhten Druck von etwa 20 bis über 400 bar durch eine Vielzahl von Düsen auf das zu verfestigende Vlies geleitet wird. Die Impulskraft der Wasserstrahlen führt dabei zu einer mechanischen Verankerung der Fasern im Produkt. Als Werkzeug für diese Methode dienen sogenannte Düsenstreifen, die in einer oder mehreren Reihen angebracht sein können. Dabei weist jede Reihe eine Vielzahl von Düsen auf. Die maximale Düsenanzahl kann bis zu 20.000 Düsen pro Streifen betragen, wobei typische Düsendurchmesser in einem Bereich von 0,05 bis 0,3 mm liegen.

Die WO 0231841 breschreibt einen leitfähigen Vliesstoff, der aus einem Faserflor aus präoxidierten Fasern für Carbonfasern durch Verfestigung des Faserflors mit Hochdruck-Fluidstrahlen bei Drücken von 100 bis 300 bar, Verdichtung des verfestigten Faservlieses sowie anschließende Carbonisierung und/oder Graphitierung unter einer Schutzgasatmosphäre bei Temperaturen von 800 °C bis 2500 °C erhalten wurde.

Die DE 10 2006 060 932 A1 beschreibt temperaturstabile Gebilde, die Fasern und eine Beschichtung umfassen, wobei diese Beschichtung kovalent an die Oberfläche der Fasern gebunden ist. Speziell handelt es sich um leitfähige Vliesstoffe, die einer Plasmabeschichtung mit fluorierten Kohlenwasserstoffen unterzogen wurden und die sich als Gasdiffusionsschicht für Brennstoffzellen eignen. Zur Herstellung des leitfähigen Vliesstoffs werden Carbonfasern oder Carbonfaser-Precursoren zu einem Faserflor gelegt und durch Einwirken von Hochdruck-Fluidstrahlen verfestigt und anschließend vorgetrocknet, kalandriert und carbonisiert.

Die US 2019/0165379 A1 beschreibt ein Material für eine Gasdiffusionsschicht auf Basis eines Carbonfaservliesstoffs der in der Ebene Bereiche mit hohen und Bereiche mit niedrigen Flächengewichten aufweist und wobei wenigstens eine der Oberflächen des Vliesstoffs ein unebenes Muster mit Einbuchtungen und Erhebungen aufweist, das unabhängig von der Gewichtsverteilung der Fasern ist. Die Herstellung des Vliesstoffs umfasst ein Wasserstrahl-Verfahren.

Keines der zuvor genannten Dokumente enthält Angaben zur Qualität des bei der Wasserstrahlbehandlung eingesetzten Wassers.

Es wurde nun gefunden, dass hochreine Kohlefaservliesstoffe hergestellt werden können, wenn man trocken gelegte Vliese aus Carbonfasern oder Carbonfaser-Precursoren einer Verfestigung durch Einwirken von wasserhaltigen Fluidstrahlen unterzieht. Überraschenderweise gelingt es gerade mit einem Wasserstrahlverfestigungsverfahren, hochreine Vliesstoffe mit einer sehr geringen Ionenkonzentration herzustellen, die sich zu GDL mit einer ebenfalls sehr geringen Ionenkonzentration weiterverarbeiten lassen. Vorteilhafterweise zeichnen sich die erhaltenen Vliesstoffe durch eine sehr geringe Anzahl an sogenannten Düsenstreifenfehlern aus. Diese können entstehen, wenn einzelne Düsen des Düsenstreifens verstopfen.

### ZUSAMMENFASSUNG DER ERFINDUNG

Ein erster Gegenstand der Erfindung ist eine Gasdiffusionslage, erhältlich durch ein Verfahren bei dem man
a) eine Faserzusammensetzung bereitstellt, die Carbonfasern und/oder Precursoren von Carbonfasern umfasst,
b) die in Schritt a) bereitgestellte Faserzusammensetzung einem Verfahren zur Herstellung eines Faserflors unterzieht,
c) den Faserflor durch Einwirken von wasserhaltigen Fluidstrahlen zu einem Vliesstoff verfestigt, wobei das eingesetzte Wasser einen Leitwert von höchstens 250 Mikrosiemens/cm bei 25 °C aufweist,
d) gegebenenfalls den in Schritt c) erhaltenen Vliesstoff einer thermischen und/oder mechanischen Behandlung zur Trocknung und/oder weiteren Verfestigung unterzieht,
e) falls die in Schritt a) eingesetzte Faserzusammensetzung Precursoren von Carbonfasern umfasst, den Vliesstoff einer Pyrolyse bei einer Temperatur von wenigstens 1000 °C unterzieht.

In einer speziellen Ausführungsform wird der Vliesstoff aus Schritt c), d) oder e) (d.h. je nachdem, welche dieser Schritte durchgeführt werden, im Anschluss an den letzten dieser Schritte) mit einem Hydrophobierungsmittel ausgerüstet (= Schritt f)).

In einer weiteren speziellen Ausführungsform wird der Vliesstoff aus Schritt c), d), e) oder f) (d.h. je nachdem, welche dieser Schritte durchgeführt werden, im Anschluss an den letzten dieser Schritte) mit einer mikroporösen Lage beschichtet (= Schritt g)).

Die Erfindung betrifft weiterhin einen durch Einwirken von wasserhaltigen Fluidstrahlen verfestigten Faserflor (wasserstrahlverfestigten Vliesstoff) mit einer sehr geringen Ionenkonzentration. Gegenstand der Erfindung ist daher auch ein Vliesstoff, erhältlich durch ein Verfahren, bei dem man
a) eine Faserzusammensetzung bereitstellt, die Carbonfasern und/oder Precursoren von Carbonfasern umfasst,
b) die in Schritt a) bereitgestellte Faserzusammensetzung einem Verfahren zur Herstellung eines Faserflors unterzieht,
c) den Faserflor durch Einwirken von wasserhaltigen Fluidstrahlen zu einem Vliesstoff verfestigt, wobei das eingesetzte Wasser eine Leitfähigkeit von höchstens 250 Mikrosiemens/cm bei 25 °C aufweist.

Bezüglich der Schritte a), b) und c) wird auf die folgenden Ausführungen zu diesen Schritten in vollem Umfang Bezug genommen.

Ein weiterer Gegenstand der Erfindung ist eine Brennstoffzelle, umfassend wenigstens eine Gasdiffusionslage, wie zuvor und im Folgenden definiert.

### BESCHREIBUNG DER ERFINDUNG

Die nach dem erfindungsgemäßen Verfahren erhaltenen Gasdiffusionslagen haben folgende Vorteile:
- Die aus trocken gelegten Carbonfasern durch Wasserstrahlverfestigung erhaltenen Carbonfaser-Vliesstoffe und die darauf basierenden GDL zeichnen sich durch eine sehr geringe Ionenkonzentration aus.
- Auch die aus trocken gelegten Carbonfaser-Precursoren durch Wasserstrahlverfestigung und anschließende Carbonisierung oder Graphitisierung erhaltenen Vliesstoffe und die darauf basierenden GDL zeichnen sich durch eine sehr geringe Ionenkonzentration aus.
- Die durch Wasserstrahlverfestigung nach dem erfindungsgemäßen Verfahren erhaltenen Vliesstoffe weisen eine sehr geringe Anzahl an sogenannten Düsenstreifenfehlern auf.
- Im Vergleich zu den bisher im Stand der Technik eingesetzten GDL weisen die erfindungsgemäßen vergleichbar gute mechanische Eigenschaften auf.
- Brennstoffzellen auf Basis der erfindungsgemäßen GDL verfügen gegenüber Brennstoffzellen auf Basis konventioneller GDL über eine größere Lebensdauer.

Die erfindungsgemäße Gasdiffusionslage umfasst als flächiges elektrisch leitfähiges Material einen Kohlefaser-Vliesstoff. Bei dem Kohlefaser-Vliesstoff und der Gasdiffusionslage handelt es sich um flächenförmige Gebilde, die über eine im Wesentlichen zweidimensionale, ebene Ausdehnung und eine demgegenüber geringere Dicke verfügen. Die Gasdiffusionslage weist eine Grundfläche auf, die in der Regel im Wesentlichen der Grundfläche der angrenzenden Membran mit den Katalysatorschichten und der Grundfläche der angrenzenden Strömungsverteilerplatte der Brennstoffzelle entspricht. Die Form der Grundfläche der Gasdiffusionslage kann beispielsweise polygonal (n-eckig mit n ≥ 3, z. B. dreieckig, viereckig, fünfeckig, sechseckig, etc.), kreisförmig, kreissegmentförmig (z. B. halbkreisförmig), ellipsenförmig oder ellipsensegmentförmig sein. Bevorzugt ist die Grundfläche rechteckig oder kreisförmig.

Herstellung der Gasdiffusionslage

### Schritt a)

In Schritt a) des erfindungsgemäßen Verfahrens wird eine Faserzusammensetzung bereitgestellt, die Carbonfasern und/oder Precursoren von Carbonfasern umfasst.

Bevorzugte Carbonfasern bestehen zu wenigstens 90 Gew.-%, bevorzugt zu wenigstens 92 Gew.-%, bezogen auf ihr Gesamtgewicht, aus Kohlenstoff. In einer speziellen Ausführungsform können Carbonfasern eingesetzt werden, die einer Graphitisierung unterzogen wurden. Diese Carbonfasern weisen einen höheren Kohlenstoffgehalt auf und bestehen dann insbesondere zu wenigstens 95 Gew.-% aus Kohlenstoff.

Geeignete Precursoren für Carbonfasern sind Fasern aus synthetischen oder natürlichen Quellen, die sich durch einen oder mehrere Behandlungsschritte in Carbonfasern überführen lassen (Verkohlung). Dazu zählen z.B. Fasern aus Polyacrylnitril-Homo- und Copolymeren (PAN-Fasern), Phenolharzen, Polyestern, Polyolefinen, Cellulose, Aramiden, Polyetherketonen, Polyetheresterketonen, Polyethersulfonen, Polyvinylalkohol, Lignin, Pech und Mischungen davon. Bevorzugt umfasst die in Schritt a) bereitgestellte Faserzusammensetzung PAN-Fasern als Precursor-Fasern oder besteht aus PAN-Fasern als Precursorfasern. In einer ersten bevorzugten Ausführungsform umfasst die in Schritt a) bereitgestellte Faserzusammensetzung PAN-Fasern und davon verschiedene Fasern, die vorzugsweise ausgewählt sind unter Fasern aus Phenolharzen, Polyestern, Polyolefinen, Cellulose, Aramiden, Polyetherketonen, Polyetheresterketonen, Polyethersulfonen, Polyvinylalkohol, Lignin, Pech und Mischungen davon. Solche zusätzlichen Polymere sind vorzugsweise in einer Menge von bis zu 50 Gew.-%, besonders bevorzugt von bis zu 25 Gew.-%, bezogen auf den Carbonfaser-Precursor, in diesem enthalten. In einer zweiten bevorzugten Ausführungsform besteht die in Schritt a) bereitgestellte Faserzusammensetzung ausschließlich aus PAN-Fasern.

Geeignete PAN-Fasern sind ausgewählt unter PAN-Homopolymeren, PAN-Copolymeren und Mischungen davon. PAN-Copolymere enthalten wenigstens ein Comonomer einpolymerisiert, das vorzugsweise ausgewählt ist unter (Meth)acrylamid, Alkylacrylaten, Hydroxyalkylacrylaten, Alkyletheracrylaten, Polyetheracrylaten, Alkylvinylethern, Vinylhalogeniden, Vinylaromaten, Vinylestern, ethylenisch ungesättigten Dicarbonsäuren, deren Mono- und Diestern, und Mischungen davon. Beispielsweise ist das Comonomer ausgewählt unter Acrylamid, Methylacrylat, Methylmethacrylat, Ethylacrylat, n-Propylacrylat, n-Butylacrylat, n-Octylacrylat, Laurylacrylat, Stearylacrylat, 2-Ethylhexylacrylat, Benzylacrylat, 2-Hydroxyethylacrylat, 2-Hydroxypropylacrylat, 4-Hydroxybutylacrylat, 2-Methoxyethylacrylat, 4-Methoxybutylacrylat, Diethylenglycol-ethyletheracrylat, 2-Butoxyethylacrylat, Ethylvinylether, Acrylsäure, Methacrylsäure, Itaconsäure, Itaconsäuremonomethylester, Itaconsäuremonolaurylester, Fumarsäuredimethylester, Styrol, Vinylacetat, Vinylbromid, Vinylchlorid, etc. Wird in Schritt a) als Carbonfaser-Precursor eine Polyacrylnitril-Copolymerfaser eingesetzt, so beträgt der Anteil an Comonomeren höchstens 20 Gew.-%, bevorzugt höchstens 10 Gew.-%, bezogen auf das Gesamtgewicht der zur Polymerisation eingesetzten Monomere. Bevorzugt werden in Schritt a) als Carbonfaser-Precursor Polyacrylnitril-Homopolymerfasern eingesetzt.

PAN-Polymere können z. B. als Lösung durch Nassspinnen und Koagulation zu Filamenten versponnen und zu Tauen (Faserbündeln) zusammengefasst werden. PAN-Copolymere weisen vielfach einen geringeren Schmelzpunkt auf als PAN-Homopolymere und eignen sich daher nicht nur für den Einsatz in Nassspinverfahren, sondern auch in Schmelzspinnverfahren. Die so erhaltenen PAN-Fasern werden in der Regel einer oxidativen Cyclisierung (auch kurz als Oxidation oder Stabilisierung bezeichnet) in einer sauerstoffhaltigen Atmosphäre bei erhöhten Temperaturen von etwa 180 bis 300 °C unterzogen. Durch die dabei resultierende chemische Vernetzung wird die Formstabilität der Fasern verbessert.

Die bei der oxidativen Cyclisierung erhaltenen Fasern können ohne weitere Aufarbeitung als Precursoren von Carbonfasern in Schritt a) eingesetzt werden.

Es ist auch möglich, die bei der oxidativen Cyclisierung erhaltenen Fasern wenigstens einem Aufarbeitungsschritt zu unterziehen, vorzugsweise ausgewählt unter Reinigen, Beschichten mit wenigstens einem Schlichtemittel, Trocknen und Kombinationen aus wenigstens zwei dieser Behandlungsschritte. Um die Fasern nach der elektrochemischen Oxidation zu reinigen, können diese einem Waschprozess unterzogen werden. Das Waschen dient speziell dem Entfernen von Faserfragmenten. Nach dem Waschen schließt sich in der Regel ein Trocknungsschritt an. Zur Modifizierung der Oberflächeneigenschaften können die Fasern zumindest teilweise mit wenigstens einem Schlichtemittel beschichtet werden. Das Schlichtemittel kann z.B. in Form einer Lösung in einem geeigneten Lösungsmittel oder in Form einer Dispersion eingesetzt werden. Die Fasern können zum Applizieren der Beschichtung z.B. durch ein Schlichtebad hindurchgeführt werden. Die Schlichte kann bei der Wasserstrahlverfestigung in Schritt c) zumindest teilweise von den Fasern abgelöst werden. Sofern das in Schritt c) zur Verfestigung des Faserflors eingesetzte Wasser zumindest teilweise recycled wird, kann es von Vorteil sein, das Abwasser der Wasserstrahlverfestigung einer Aufarbeitung zu unterziehen, bei der im Abwasser enthaltene Schlichte teilweise oder vollständig entfernt wird.

Nach dem Beschichten der Fasern mit wenigstens einem Schlichtemittel werden diese in der Regel einer (weiteren) Trocknung unterzogen. Das Trocknen kann jeweils z.B. mit heisser Luft, heissen Platten, erwärmten Walzen oder Wärmestrahlern durchgeführt werden.

Die so erhaltenen Precursoren von Carbonfasern können als Faserzusammensetzung in Schritt a) des erfindungsgemäßen Verfahrens eingesetzt und weiterverarbeitet werden. Alternativ kann eine PAN-Fasern enthaltende oder aus PAN-Fasern bestehende Faserzusammensetzung einer Pyrolyse bei einer Temperatur von wenigstens 1000 °C unterzogen werden, wobei die PAN-Precursoren zu Kohlenstofffasern umgewandelt werden. Bezüglich der Pyrolyse-Bedingungen wird auf die folgenden Ausführungen zu Schritt e) Bezug genommen. Die so erhaltenen Carbonfasern können ebenfalls als Faserzusammensetzung in Schritt a) des erfindungsgemäßen Verfahrens eingesetzt und weiterverarbeitet werden.

### Schritt b)

In Schritt b) des erfindungsgemäßen Verfahrens wird die in Schritt a) bereitgestellte Faserzusammensetzung einem Verfahren zur Herstellung eines Faserflors (Carbonfaservlies bzw. Carbonfaserprecursorvlies) unterzogen. Geeignete Verfahren für die Vliesstoffherstellung sind dem Fachmann bekannt und z.B. in H. Fuchs, W. Albrecht, Vliesstoffe, 2. Aufl. 2012, S. 121 ff., Wiley-VCH, beschrieben. Dazu zählen z.B. Trockenverfahren, Nassverfahren, Extrusionsverfahren und Lösungsmittelverfahren. In einer bevorzugten Ausführung wird die in Schritt a) bereitgestellte Faserzusammensetzung in Schritt b) einem Trockenlegeverfahren zur Herstellung eines Faserflors unterzogen. Die Herstellung von trockengelegten Vliesstoffen kann prinzipiell nach einem Kardierverfahren oder nach einem aerodynamischen Verfahren erfolgen. Nach dem Kardierverfahren erfolgt die Bildung eines Faserflors mittels Karde oder Krempel, wohingegen bei aerodynamischen Verfahren die Bildung von Vliesen aus Fasern unter Zuhilfenahme von Luft erfolgt. Gewünschtenfalls können die Faserflore in mehreren Lagen zu einem Vlies übereinander gelegt werden. Das Trockenlegeverfahren in Schritt b) kann eine Modifizierung der Eigenschaften, z.B. durch Vliesstrecken umfassen. Hierdurch kann z.B. eine Vliesdickenkalibrierung und/oder Vorverfestigung des Faserflors erfolgen.

### Schritt c)

In Schritt c) des erfindungsgemäßen Verfahrens wird der in Schritt b) erhaltene Faserflor durch Einwirken von wasserhaltigen Fluidstrahlen zu einem Vliesstoff verfestigt. Mit wasserhaltigen Fluidstrahlen sind dabei auch Fluidströme und Dampfstrahlen erfasst.

Grundsätzlich eignen sich zur Wasserstrahlverfestigung die dafür bekannten mechanischen Verfestigungsverfahren, die auch als Spunlace-Verfahren bezeichnet werden. Prinzipiell geeignet ist auch die sogenannte Steamjet-Technologie, bei der überhitzte Dampfstrahlen zur Vliesverfestigung eingesetzt werden. Derartige Verfahren sind dem Fachmann bekannt. In einer speziellen Methode zur mechanischen Verfestigung von Vliesstoffen wird Wasser mit einem erhöhten Druck von etwa 20 bis 500 bar durch eine Vielzahl von Düsen auf das zu verfestigende Vlies geleitet. Die Düsen sind dabei in einer oder mehreren Reihen in sogenannten Düsenstreifen angeordnet. Diese Düsenstreifen weisen in jeder Reihe eine Vielzahl von Düsen auf. Die maximale Düsenanzahl kann bis zu 20000 Düsen pro Streifen betragen, wobei typische Düsendurchmesser in einem Bereich von 0,05 bis 0,5 mm liegen. Die Lochdurchmesser der Düsen weisen in der Regel sehr geringe Toleranzen von z.B. weniger als 2 mm auf. Zur Erzielung fehlerfreier Vliesstoffe ist es erforderlich, dass sich die Lochdurchmesser der Düsen im Betrieb nicht verändern und insbesondere die Düsen sich nicht verschließen.

Es wurde nun gefunden, dass die Leitfähigkeit des zur Verfestigung des Faserflors (Vlieses) eingesetzten Wassers wesentlich für die Qualität der daraus hergestellten Gasdiffusionslagen für einen Einsatz in Brennstoffzellen ist. Daher ist es ein kritisches Merkmal des erfindungsgemäßen Verfahrens, dass das zur Verfestigung des Vliesstoffs in Schritt c) eingesetzte Wasser eine Leitfähigkeit von höchstens 250 Mikrosiemens/cm (µS/cm) bei 25 °C aufweist. Bevorzugt weist das in Schritt c) eingesetzte Wasser eine Leitfähigkeit von höchstens 200 Mikrosiemens/cm bei 25 °C, besonders bevorzugt von höchstens 150 Mikrosiemens/cm bei 25 °C, insbesondere von höchstens 100 Mikrosiemens/cm bei 25 °C, auf.

Die elektrische Leitfähigkeit ist ein Summenindikator für die Ionenkonzentration, d.h. den Anteil der in einer bestimmten Wassermenge gelösten dissoziierten Stoffe. Die Leitfähigkeit ist dabei unter anderem abhängig von der Konzentration der gelösten Stoffe, ihrem Dissoziationsgrad und der Wertigkeit und Beweglichkeit der gebildeten Kationen und Anionen sowie der Temperatur. Die Leitfähigkeitsmessung basiert auf der Bestimmung des ohmschen Widerstands der zur analysierenden Wasserprobe bzw. des Kehrwerts des Widerstands, den elektrischen Leitwert (Einheit Siemens S = Ω⁻¹). Zur Messung der Leitfähigkeit können kommerziell erhältliche Leitfähigkeitsmessgeräte (Konduktometer) verwendet werden. Die Messwerte werden dabei in der Regel in S/cm (Siemens pro Zentimeter) oder für Wasserproben mit geringer Ionenlast in µS/cm (Mikrosiemens pro Zentimeter) angegeben.

Prozess- und Betriebswasser für industrielle Verfahren stammt üblicherweise aus dem öffentlichen Trinkwassernetz oder wird aus Brunnen, Flüssen und Seen gefördert. Trinkwasser und Prozesswasser für bezüglich der Wasserqualität kritische Verfahren wird in der Regel hinsichtlich seiner Inhaltsstoffe kontrolliert und falls erforderlich Wasseraufbereitungsverfahren unterzogen. Dabei sind die Ansprüche an die Wasserreinheit in Abhängigkeit von dem jeweiligen Einsatzgebiet äußerst divers. So wird Trinkwasser als klare farblose Flüssigkeit, frei von Gerüchen und schädlichen Mikroorganismen und Substanzen, jedoch angereichert mit lebenswichtigen Mineralien und Salzen geliefert. Dieses Wasser besitzt Lebensmittelqualität, ist aber für viele technische Anwendungsbereiche nicht unbedingt geeignet. So beträgt der Grenzwert für die Leitfähigkeit nach der deutschen Trinkwasserverordnung (TrinkwV 2001, Neufassung vom 10. März 2016) 2790 Mikrosiemens/cm bei 25 °C. Das von den deutschen Wasserwerken gelieferte Leitungswasser hat je nach Härtestufe eine Leitfähigkeit von 250 bis 1000 Mikrosiemens/cm bei 25°C. Den Hauptanteil bei den anorganischen Kationen machen Na⁺, K⁺, Ca²⁺ und Mg²⁺ aus.

Zur Bereitstellung des erfindungsgemäß in Schritt c) eingesetzten Wassers kann ein zur Verfügung stehendes Trink- oder Prozesswasser einer Aufarbeitung zur Verringerung der Ionenkonzentration unterzogen werden. Dazu zählen Ionenaustausch, Elektrodeionisation, Membranverfahren, wie Nanofiltration, Umkehrosmose und Elektrodialyse, thermische Verfahren, wie Entspannungsverdampfung, etc.

Bevorzugt wird zur Verringerung der Ionenkonzentration eine Nanofiltration, Umkehrosmose oder eine Kombination dieser Verfahren eingesetzt. Sowohl die Nanofiltration, als auch die Umkehrosmose beruhen darauf, dass das aufzubereitende Wasser unter Druck, der höher ist als der osmotische Druck, durch eine semipermeable Membran geführt wird, wobei ein Permeat mit reduzierter Ionenkonzentration erhalten wird. Die Nanofiltration erfolgt dabei bei geringeren Drücken als die Umkehrosmose und verfügt somit über eine geringere Reinigungsleistung als die Umkehrosmose, ist jedoch in vielen Fällen ausreichend. Möglich ist auch eine Vorreinigung durch eine Nanofiltration und eine weitere Verringerung der Ionenkonzentration durch eine anschließende Umkehrosmose.

Bevorzugt weist das in Schritt c) eingesetzte Wasser einen Gehalt an Na⁺-Ionen von höchstens 200 Gew.-ppm, besonders bevorzugt von höchstens 25 Gew.-ppm, auf.

Bevorzugt weist das in Schritt c) eingesetzte Wasser einen Gehalt an K⁺-Ionen von höchstens 200 Gew.-ppm, besonders bevorzugt von höchstens 10 Gew.-ppm, auf.

Bevorzugt weist das in Schritt c) eingesetzte Wasser einen Gehalt an Mg²⁺-Ionen von höchstens 10 Gew.-ppm auf.

Bevorzugt weist das in Schritt c) eingesetzte Wasser einen Gehalt an Ca²⁺-Ionen von höchstens 200 Gew.-ppm, besonders bevorzugt von höchstens 40 Gew.-ppm, auf.

In einer speziellen Ausführungsform des erfindungsgemäßen Verfahrens wird das in Schritt c) zur Verfestigung des Faserflors eingesetzte Wasser teilweise oder vollständig recycled. Das erfindungsgemäße Verfahren ermöglicht es somit, den Frischwasserbedarf und die zu entsorgende Abwassermenge für die Wasserstrahlverfestigung zu verringern. Dabei wird sicher gestellt, dass das zur Behandlung des Faserflors eingesetzte Wasser immer eine Leitfähigkeit im erfindungsgemäßen Bereich aufweist und auch ansonsten eine Kontamination des Faserflors mit im Abwasser der Wasserstrahlverfestigung enthaltenen Komponenten vermieden wird. Dazu kann das Abwasser der Wasserstrahlverfestigung teilweise oder vollständig einer Aufarbeitung unterzogen und/oder ausgetauscht werden.

Die Aufarbeitung und/oder der Austausch des Abwassers der Wasserstrahlverfestigung kann kontinuierlich oder in Intervallen erfolgen.

Bevorzugt ist ein Verfahren, bei dem man einen Faserflor durch Einwirken von wasserhaltigen Fluidstrahlen zu einem Vliesstoff verfestigt, aus der Behandlung des Faserflors einen Abwasserstrom ausschleust, einen Sollwert für die Leitfähigkeit des Abwasserstroms festlegt, den Istwert der Leitfähigkeit des Abwasserstroms bestimmt, nach Erreichen eines Grenzwerts für die Abweichung des Istwerts vom Sollwert den Abwasserstrom zumindest teilweise einer Aufarbeitung und/oder einem Austausch mit Wasser geringerer Ionenkonzentration unterzieht und den Abwasserstrom zumindest teilweise in die Behandlung des Faserflors zurückführt.

Zur Aufarbeitung kann der Abwasserstrom einer Verringerung der Ionenkonzentration, wie zuvor beschrieben, unterzogen werden. Zusätzlich kann der Abwasserstrom einer weiteren Reinigung unterzogen werden, z.B. zur Entfernung von Fasern und Faserfragmenten.

### Schritt d)

Gegebenenfalls kann man den in Schritt c) erhaltenen Vliesstoff einer thermischen und/oder mechanischen Behandlung zur Trocknung und/oder weiteren Verfestigung unterziehen. Geeignete Trocknungsverfahren sind Konvektionstrocknung, Kontakttrocknung, Strahlungstrocknung und Kombinationen davon.

Bevorzugt werden die in Schritt c) erhaltenen Vliesstoff einer Behandlung durch Kalandrierung unterzogen. Die Kaladrierung erlaubt eine weitere thermische Verfestigung des Vliesstoffs und gleichzeitig eine Dickenkalibrierung. Dabei können auch mehrere Vliesschichten miteinander verbunden werden. In einer speziellen Ausführungsform enthält der in Schritt c) erhaltene Vliesstoff thermoplastische Fasern, die als Bindefasern dienen und in der Regel carbonisierbar sind. In diesem Falle kann in Schritt d) eine thermische Kalanderverfesting des Vliesstoffs unter Ausbildung von Bindestellen erfolgen, an denen Fasern plastifiziert und miteinander verschweißt werden (Thermobonding).

### Schritt e)

Falls die in Schritt a) eingesetzte Faserzusammensetzung Precursoren von Carbonfasern umfasst, wird der Vliesstoff in Schritt e) einer Pyrolyse bei einer Temperatur von wenigstens 1000 °C unterzogen. In Abhängigkeit von der Temperatur bei der Pyrolyse unterscheidet man zwischen Carbonisierung und Graphitisierung. Carbonisierung bezeichnet eine Behandlung bei etwa 1000 bis 1500 °C unter Inertgasatmosphäre, die zur Abspaltung flüchtiger Produkte führt. Durch Graphitisierung, d. h. Erhitzen auf etwa 2000 bis 3000 °C unter Inertgas, erhält man so genannte Hochmodul- oder Graphitfasern. Der Kohlenstoffanteil steigt bei der Pyrolyse z.B. von ca. 67 Gew.-% bei der Behandlung bei Temperaturen von unter 1000°C auf etwa 99 Gew.-% bei der Behandlung bei Temperaturen von über 2000°C. Speziell die durch Graphitisierung erhaltenen Fasern verfügen über eine hohe Reinheit, sind leicht, hoch fest und sehr gut leitfähig für Elektrizität und Wärme.

### Schritt f)

Optional kann der Vliesstoff im Anschluss an den Schritt c), d) oder e) mit wenigstens einem Additiv ausgerüstet werden. Die Additive sind vorzugsweise ausgewählt unter Hydrophobierungsmitteln f1), leitfähigkeitsverbessernden Additiven f2), weiteren von f1) und f2) verschiedenen Additiven f3) und Mischungen davon.

Bevorzugt wird der Vliesstoff mit einem Hydrophobierungsmittel f1) beschichtet und/oder imprägniert (ausgerüstet), das wenigstens ein fluorhaltiges Polymer enthält. Bevorzugt ist das fluorhaltige Polymer ausgewählt unter Polytetrafluorethylenen (PTFE), Tetrafluorethylen-Hexafluorpropylen-Copolymeren (FEP), Perfluoralkoxy-Polymeren (PFA) und Mischungen davon. Perfluoralkoxy-Polymere sind z.B. Copolymere aus Tetrafluorethylen (TFE) und Perfluoralkoxyvinylethern, wie Perfluorvinylpropylether. Bevorzugt wird als fluorhaltiges Polymer ein Polytetrafluorethylen eingesetzt.

Bevorzugt beträgt der Massenanteil des fluorhaltigen Polymers f1) 0,5 bis 40 %, besonders bevozugt 1 bis 20 %, insbesondere 1 bis 10 %, bezogen auf die Masse des Vliesstoffs. In einer speziellen Ausführungsform ist das fluorhaltige Polymers PTFE und beträgt der Massenanteil des 0,5 bis 40 %, bevozugt 1 bis 20 %, insbesondere 1 bis 10 %, bezogen auf die Masse des Vliesstoffs.

Vielfach verfügt der Vliesstoff bereits durch die eingesetzten Kohlenstofffasern, auch ohne leitfähigkeitsverbessernde Additive, über eine gute elektrische und thermische Leitfähigkeit. Zur Verbesserung der elektrischen und der thermischen Leitfähigkeit kann der Vliesstoff jedoch zusätzlich mit wenigstens einem leitfähigkeitsverbessernden Additiv f2) ausgerüstet werden. Bevorzugt wird der Vliesstoff mit einem leitfähigkeitsverbessernden Additiv f2) ausgerüstet, das ausgewählt ist unter Metallpartikeln, Ruß, Graphit, Graphen, Kohlenstoffnanoröhren (CNT), Kohlenstoffnanofasern und Mischungen davon. Bevorzugt umfasst das leitfähigkeitsverbessernde Additiv f2) Ruß oder besteht aus Ruß. Die Ausrüstung des Vliesstoffs mit wenigstens einem leitfähigkeitsverbessernden Additiv f2) kann beispielsweise gemeinsam mit dem Polymer f1) und/oder weiteren Additiven f3) erfolgen. Bevorzugt wird zur Ausrüstung des Vliesstoffs eine wässrige Dispersion eingesetzt.

Bevorzugt beträgt der Massenanteil des leitfähigkeitsverbessernden Additivs f2) 0,5 bis 45 %, bevozugt 1 bis 25 %, bezogen auf die Masse des Vliesstoffs. In einer speziellen Ausführungsform umfasst das leitfähigkeitsverbessernde Additiv f2) Ruß oder besteht aus Ruß und beträgt der Massenanteil 0,5 bis 45 %, bevozugt 1 bis 25 %, bezogen auf die Masse des Vliesstoffs.

Die Vliesstoffe können zusätzlich mit wenigstens einem weiteren Additiv f3) ausgerüstet sein. Dazu zählen z.B. von den Komponenten f1) und f2) verschiedene polymere Bindemittel, oberflächenaktive Substanzen, etc.

Geeignete Bindemittel f3) sind z. B. Furanharze, etc. Speziell können die Vliesstoffe zusätzlich mit wenigstens einem von f1) verschiedenen Polymer ausgerüstet werden, wobei bevorzugt Hochleistungspolymere zum Einsatz kommen. Die weiteren Polymere f3) sind bevorzugt ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon. Die Ausrüstung des Vliesstoffs mit wenigstens einem Additiv f3) kann beispielsweise gemeinsam mit dem Polymer f1) und/oder leitfähigkeitsverbessernden Additiven f2) erfolgen. Die Bindemittel f3) können gegebenenfalls anschließend gehärtet werden. Dies kann z.B. gemeinsam mit dem Trocknen und/oder Sintern im Anschluß an die Ausrüstung mit den Polymeren f1) oder auch separat davon erfolgen.

Bevorzugt beträgt der Gesamtmassenanteil an weiteren Additiven f3) 0 bis 80 %, bevozugt 0 bis 50 %, bezogen auf die Masse des Vliesstoffs. Sofern die Vliesstoffe zusätzlich wenigstens ein weiteres Additiv f3) enthalten, beträgt der Gesamtmassenanteil an weiteren Additiven f3) 0,1 bis 80 %, bevozugt 0,5 bis 50 %, bezogen auf die Masse des Vliesstoffs.

Das Vliesstoff weist vorzugsweise eine Dicke im Bereich von 50 bis 500 µm, besonders bevorzugt von 100 bis 400 µm auf. Diese Dicke bezieht sich auf den nicht ausgerüsteten, unkomprimierten Zustand des Vliesstoffs, d. h. vor dem Einbau der GDL in eine Brennstoffzelle.

Die Ausrüstung der Vliesstoffe mit den Komponenten f1), f2) und/oder f3) kann durch dem Fachmann bekannte Aufbringmethoden erfolgen, wie insbesondere Beschichten und/oder Imprägnieren. Vorzugsweise wird zum Beschichten und/oder Imprägnieren der Vliesstoffe ein Verfahren eingesetzt, das ausgewählt ist unter Foulardieren, Rakeln, Sprühen, Pflatschen und Kombinationen davon.

Beim Foulardverfahren wird der Vliesstoff durch ein Foulard (Tauchbecken) mit der Additiv-haltigen Lösung oder Dispersion geführt und anschließend über ein druck- und ggf. spalteinstellbares Walzenpaar auf die gewünschte Auftragsmenge an Additiv abgequetscht.

Beim Rakelverfahren wird zwischen Tiefdruck und Siebdruck unterschieden. Beim Tiefdruck wird als Rakel beispielsweise ein messerartig geschliffenes Stahlband mit oder ohne Stützrakel eingesetzt. Sie dient dazu, die überschüssige Additiv-haltige Lösung oder Dispersion von den Stegen des Druckzylinders abzustreifen (Abrakeln). Beim Siebdruck besteht die Rakel hingegen in der Regel aus Gummi oder Kunststoff mit einer scharf- oder rundgeschliffenen Kante.

Beim Sprühauftrag wird die Additiv-haltige Lösung oder Dispersion mittels wenigstens einer Düse, speziell wenigstens einer Schlitzdüse, auf den auszurüstenden Vliesstoff aufgetragen.

Das Pflatschverfahren (Kiss-Roll) dient vorzugsweise zur Beschichtung der Materialunterseite horizontal verlaufender Bahnen. Das Beschichtungsmedium kann gegenläufig oder mitläufig auf die Warenbahn aufgebracht werden. Mittels Übertragungswalzen kann eine indirekte Beschichtung mit geringen Auftragsmengen realisiert werden.

In einer speziellen Ausführungsform wird der in Schritt f) des erfindungsgemäßen Verfahrens mit den Komponenten f1), f2) und/oder f3) ausgerüstete Vliesstoff einer Trocknung und/oder thermischen Behandlung unterzogen. Geeignete Verfahren zur Trocknung und/oder thermischen Behandlung von mit Additiv-haltigen Lösungen oder Dispersionen beschichteten und/oder imprägnierten Vliesstoffen sind prinzipiell bekannt. Bevorzugt erfolgt die Trocknung und/oder thermische Behandlung bei einer Temperatur im Bereich von 20 bis 250 °C, besonders bevorzugt 40 bis 200 °C. Zusätzlich kann die Trocknung bei einem verringerten Druck erfolgen.

### Schritt g)

In einer bevorzugten Ausführungsform besteht die erfindungsgemäße Gasdiffusionslage aus einem zweilagigen Schichtverbund auf Basis eines Vliesstoffs und einer mikroporösen Lage (MPL) auf einer der Flächen des Vliesstoffs. Zur Herstellung der Gasdiffusionslage kann man entsprechend den in Schritt c), d), e) oder f) erhaltenen Vliesstoff mit einer mikroporösen Lage beschichten.

Im Gegensatz zum makroporösen Vliesstoff ist die MPL mikroporös mit Porendurchmessern, die in der Regel deutlich unter einem Mikrometer liegen, bevorzugt von höchstens 900 nm, besonders bevorzugt von höchstens 500 nm, insbesondere von höchstens 300 nm. Der mittlere Porendurchmesser der MPL liegt vorzugsweise in einem Bereich von 5 bis 200 nm, besonders bevorzugt von 10 bis 100 nm. Die Bestimmung des mittleren Porendurchmessers kann durch Quecksilber-Porosimetrie erfolgen. Die MPL enthält leitfähige Kohlenstoffpartikel, vorzugsweise Ruß oder Graphit, in einer Matrix aus einem polymeren Binder. Bevorzugte Binder sind die zuvor genannten fluorhaltigen Polymere, speziell Polytetrafluorethylen (PTFE).

Die mikroporöse Lage weist vorzugsweise eine Dicke im Bereich von 10 bis 100 µm (Mikrometer), besonders bevorzugt von 20 bis 50 µm auf. Diese Dicke bezieht sich auf den unkomprimierten Zustand der mikroporösen Lage B), d. h. vor dem Einbau der GDL in eine Brennstoffzelle.

Die erfindungsgemäße Gasdiffusionslage weist vorzugsweise eine Dicke (Gesamtdicke aus Vliesstoff und MPL) im Bereich von 80 bis 1000 µm, besonders bevorzugt von 100 bis 500 µm auf. Diese Dicke bezieht sich auf den unkomprimierten Zustand der GDL, d. h. vor ihrem Einbau in eine Brennstoffzelle.

Ein weiterer Gegenstand der Erfindung ist eine Brennstoffzelle, umfassend wenigstens eine Gasdiffusionslage, wie zuvor definiert. Prinzipiell eignet sich die erfindungsgemäße Gasdiffusionslage für alle üblichen Brennstoffzelltypen, speziell Niedertemperatur-Protonenaustauschmembran-Brennstoffzellen (PEMFC). Auf die zuvor gemachten Ausführungen zum Aufbau von Brennstoffzellen wird in vollem Umfang Bezug genommen.

### FIGURENBESCHREIBUNG

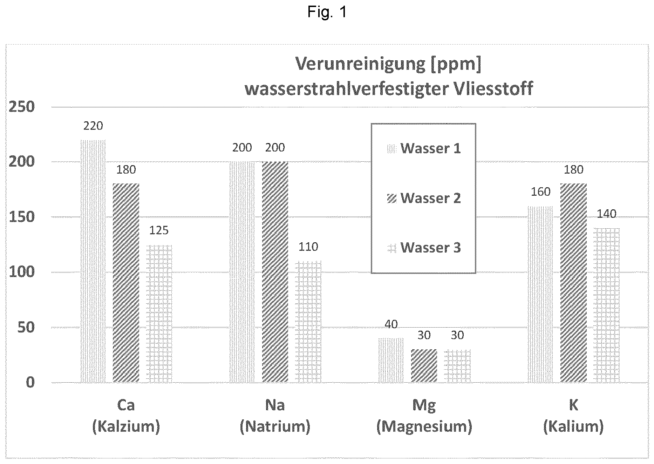

Figur 1 zeigt die Metallgehalte (Ca²⁺, Na⁺, Mg²⁺ und K⁺) eines unbehandelten Vliesstoffs und eines mit Wasser unterschiedlicher Leitfähigkeit verfestigten Vliesstoffs.

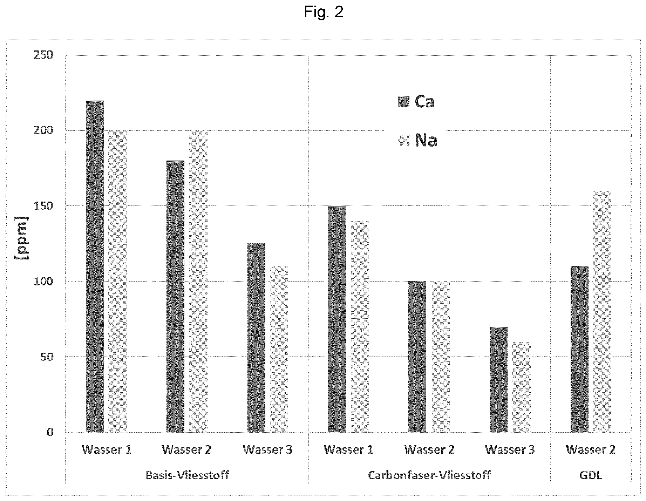

Figur 2 zeigt den Gehalt an Ca²⁺- und Na⁺-Ionen eines mit Wasser unterschiedlicher Leitfähigkeit verfestigten Basisvliesstoffs, des daraus durch Carbonisierung erhaltenen Carbonfaser-Vliesstoffs und einer nach Auftragen einer MPL erhaltenen Gasdiffusionslage.

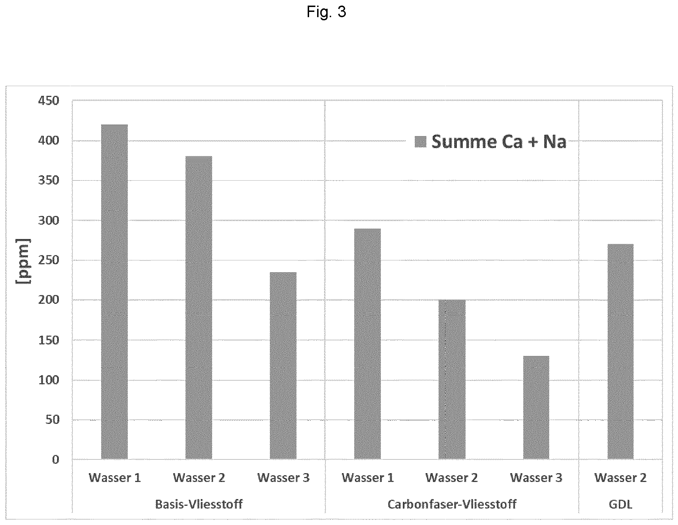

Figur 3 zeigt analog zu Figur 2 die Summe des Gehalts an Ca²⁺- und Na⁺-Ionen.

Die Erfindung wird anhand der folgenden, nicht einschränkend zu verstehenden Beispiele erläutert.

### BEISPIELE

Die Bestimmung der Metallgehalte (Ca²⁺, Na⁺, Mg²⁺ und K⁺) der Basisvliesstoffe aus oxidierten Polyacrylnitrilfasern, der daraus resultierenden carbonisierten Vliesstoffe und GDL erfolgte durch ein ICP-AES-Verfahren (Inductively Coupled Argon Plasma - Atomic Emission Spectrometry). Die Vorbehandlung der Proben (der Aufschluss) kann nach der EPA-Methode 3050A zum Säureaufschluss von Sedimenten, Schlämmen und Böden erfolgen. Dieser Prozess umfasst die folgenden Schritte:
1.) Salpetersäureaufschluss bei 95°C für 15 Minuten.
2.) Weitere Zugabe von Salpetersäure unter Weiterführung des Aufschlusses für 1h.
3.) Von der Heizplatte nehmen; Zugabe von deionisiertem Wasser und 20%iger Wasserstoffperoxid-Lösung.
4.) Nochmals ca. 15 Minuten auf der Heizplatte erhitzen, nachdem die Blasenbildung vollständig zum Erliegen kommt, wieder von der Heizplatte nehmen.
5.) Konzentrierte Salzsäure zugeben und nochmals für 1h aufschließen.

Zur Wasserstrahlverfestigung wurde Wasser mit einer Leitfähigkeit gemäß der folgenden Tabelle 1 eingesetzt. Das Vergleichswasser 1 entspricht einem Prozesswasser, wie es üblich für den Einsatz in konventionellen Verfahren zur Vliesverfestigung mit Wasserstrahlen ist. Bei den Wasserchargen 2 und 3 wurde die Ionenkonzentration durch eine Nanofiltration reduziert.

**Tabelle 1**

| Wassercharge | Leitfähigkeit [Mikrosiemens/cm] |
|---|---|
| V1 (Vergleich) | 290 |
| 2 | 100 |
| 3 | 22 |

### Herstellungsbeispiel

Zur Herstellung eines Basisvliesstoffs wurde ein trockengelegter Faserflor aus 100% oxidierten Polyacrylnitrilfasern auf einer Kardieranlage abgelegt. Der Faserflor wurde einer Verfestigungseinheit zugeführt, bei der die Fasern mittels hochenergetischer Wasserstrahlen beidseitig bei Drücken von jeweils ca. 100 bar in der ersten Stufe und jeweils ca. 200 bar in einer zweiten Stufe verwirbelt und miteinander verschlungen werden. Es wurden die Wasserqualitäten gemäß Tabelle 1 eingesetzt. Der Vliesstoff wurde getrocknet und aufgerollt, wobei das Flächengewicht nach der Wasserstrahlverfestigung und Trocknung 150g/m² betrug. Anschließend wurde der Vliesstoff einer Dickenkalibrierung unterzogen, wodurch die Dicke des wasserstrahlverfestigten Vliesstoffes auf 0,25 mm reduziert wurde. Anschliessend wurde der Vliesstoff einer Carbonisierungseinheit zugeführt, in der unter einer Stickstoffatmosphäre bei etwa 1000 bis 1400 °C die Carbonisierung erfolgte.

Zur Ausrüstung des Vliesstoffs wurde eine Imprägnierzusammensetzung eingesetzt, die bezogen auf den Feststoff 70% Ruß und 30% PTFE enthielt. Die Ausrüstung erfolgte durch Foulard-Imprägnierung mit einer wässrigen Dispersion mit 15% Ausrüstungsgewicht bezogen auf die Masse des GDL-Substrats (entsprechend 15 g/m²). Anschließend erfolgte noch eine Trocknung bei 180 °C und eine Sinterung bei 400 °C. Auf das so erhaltene Substrat wurde dann noch eine MPL-Paste aufgetragen, die 2,0 Gew.-% PTFE und 7,8 Gew.-% Kohlenstoff in destilliertem Wasser enthielt. Anschließend wurde der Vliesstoff bei 160 °C getrocknet und bei 400°C gesintert. Die resultierende MPL-Beladung betrug 24 g/m².

## Patentansprüche

1. Gasdiffusionslage, erhältlich durch ein Verfahren, bei dem man
a) eine Faserzusammensetzung bereitstellt, die Carbonfasern und/oder Precursoren von Carbonfasern umfasst,
b) die in Schritt a) bereitgestellte Faserzusammensetzung einem Verfahren zur Herstellung eines Faserflors unterzieht,
c) den Faserflor durch Einwirken von wasserhaltigen Fluidstrahlen zu einem Vliesstoff verfestigt, wobei das eingesetzte Wasser eine Leitfähigkeit von höchstens 250 Mikrosiemens/cm bei 25 °C aufweist,
d) gegebenenfalls den in Schritt c) erhaltenen Vliesstoff einer thermischen und/oder mechanischen Behandlung zur Trocknung und/oder weiteren Verfestigung unterzieht,
e) falls die in Schritt a) eingesetzte Faserzusammensetzung Precursoren von Carbonfasern umfasst, den Vliesstoff einer Pyrolyse bei einer Temperatur von wenigstens 1000 °C unterzieht.

2. Gasdiffusionslage nach Anspruch 1, erhältlich durch ein Verfahren, bei dem man zusätzlich den in Schritt c), d) oder e) erhaltenen Vliesstoff mit wenigstens einem Additiv ausrüstet (Schritt f)), vorzugsweise ausgewählt unter Hydrophobierungsmitteln f1), leitfähigkeitsverbessernden Additiven f2), weiteren Additiven f3) und Mischungen davon.

3. Gasdiffusionslage nach Anspruch 1 oder 2, erhältlich durch ein Verfahren, bei dem man zusätzlich den in Schritt c), d), e) oder f) erhaltenen Vliesstoff mit einer mikroporösen Lage beschichtet (Schritt g)).

4. Gasdiffusionslage nach einem der vorhergehenden Ansprüche, wobei die in Schritt a) bereit gestellte Faserzusammensetzung Precursoren von Carbonfasern umfasst, die ausgewählt sind unter nicht oxidierten Polyacrylnitril-Fasern, oxidierten Polyacrylnitril-Fasern und Mischungen davon.

5. Gasdiffusionslage nach einem der Ansprüche 1 bis 4, wobei die in Schritt a) bereit gestellte Faserzusammensetzung zusätzlich weitere Fasern enthält, ausgewählt unter Fasern aus Phenolharzen, Polyestern, Polyolefinen, Cellulose, Aramiden, Polyetherketonen, Polyetheresterketonen, Polyethersulfonen, Polyvinylalkohol, Lignin, Pech und Mischungen davon.

6. Gasdiffusionslage nach einem der vorhergehenden Ansprüche, wobei die in Schritt a) bereitgestellte Faserzusammensetzung in Schritt b) einem Trockenlegeverfahren zur Herstellung eines Faserflors unterzogen wird.

7. Gasdiffusionslage nach einem der vorhergehenden Ansprüche, wobei das in Schritt c) zur Verfestigung des Faserflors eingesetzte Wasser eine Leitfähigkeit von höchstens 200 Mikrosiemens/cm bei 25 °C, bevorzugt von höchstens 150 Mikrosiemens/cm bei 25 °C, aufweist.

8. Gasdiffusionslage nach einem der vorhergehenden Ansprüche, wobei das in Schritt c) zur Verfestigung des Faserflors eingesetzte Wasser zumindest teilweise recycled wird.

9. Gasdiffusionslage nach Anspruch 8, erhältlich durch ein Verfahren, bei dem man einen Faserflor durch Einwirken von wasserhaltigen Fluidstrahlen zu einem Vliesstoff verfestigt, aus der Behandlung des Faserflors einen Abwasserstrom ausschleust, einen Sollwert für die Leitfähigkeit des Abwasserstroms festlegt, den Istwert der Leitfähigkeit des Abwasserstroms bestimmt, nach Erreichen eines Grenzwerts für die Abweichung des Istwerts vom Sollwert den Abwasserstrom zumindest teilweise einer Aufarbeitung und/oder einem Austausch mit Wasser geringerer lonenkonzentration unterzieht und den Abwasserstrom zumindest teilweise in die Behandlung des Faserflors zurückführt.

10. Gasdiffusionslage nach einem der vorhergehenden Ansprüche, wobei man den in Schritt c) erhaltenen Vliesstoff in Schritt d) einer weiteren Verfestigung durch Kalandrierung unterzieht.

11. Gasdiffusionslage nach einem der Ansprüche 2 bis 10, wobei das Hydrophobierungsmittel f1) wenigstens ein fluorhaltiges Polymer enthält.

12. Gasdiffusionslage nach einem der Ansprüche 2 bis 11, wobei das leitfähigkeitsverbessernde Additiv f2) ausgewählt ist unter Metallpartikeln, Ruß, Graphit, Graphen, Kohlenstoffnanoröhren (CNT), Kohlenstoffnanofasern und Mischungen davon.

13. Gasdiffusionslage nach einem der Ansprüche 2 bis 12, erhältlich durch ein Verfahren, wobei man den Vliesstoff während oder nach der Beschichtung und/oder Imprägnierung mit dem Hydrophobierungsmittel in Schritt f1) einer thermischen Behandlung unterzieht.

14. Brennstoffzelle, umfassend wenigstens eine Gasdiffusionslage, wie in einem der Ansprüche 1 bis 13 definiert.

15. Vliesstoff, erhältlich durch ein Verfahren, bei dem man
a) eine Faserzusammensetzung bereitstellt, die Carbonfasern und/oder Precursoren von Carbonfasern umfasst,
b) die in Schritt a) bereitgestellte Faserzusammensetzung einem Verfahren zur Herstellung eines Faserflors unterzieht,
c) den Faserflor durch Einwirken von wasserhaltigen Fluidstrahlen zu einem Vliesstoff verfestigt, wobei das eingesetzte Wasser eine Leitfähigkeit von höchstens 250 Mikrosiemens/cm bei 25 °C aufweist.

## Claims

1. Gas diffusion layer obtainable by a method which comprises
a) providing a fibre composition which comprises carbon fibres and/or precursors of carbon fibres,
b) subjecting the fibre composition provided in step a) to a method for producing a fibrous web,
c) consolidating the fibrous web by exposure to aqueous fluid jets to form a nonwoven, the water used having a conductivity of at most 250 microsiemens/cm at 25°C,
d) optionally subjecting the nonwoven obtained in step c) to a thermal and/or mechanical treatment for drying and/or further consolidation,
e) if the fibre composition used in step a) comprises precursors of carbon fibres, subjecting the nonwoven to pyrolysis at a temperature of at least 1000°C.

2. Gas diffusion layer according to Claim 1, obtainable by a method wherein additionally the nonwoven obtained in step c), d) or e) is furnished (step f)) with at least one additive, preferably selected from hydrophobizing agents f1), conductivity-improving additives f2), further additives f3), and mixtures thereof.

3. Gas diffusion layer according to Claim 1 or 2, obtainable by a method wherein additionally the nonwoven obtained in step c), d), e) or f) is coated (step g)) with a microporous layer.

4. Gas diffusion layer according to one of the preceding claims, wherein the fibre composition provided in step a) comprises precursors of carbon fibres which are selected from nonoxidized polyacrylonitrile fibres, oxidized polyacrylonitrile fibres, and mixtures thereof.

5. Gas diffusion layer according to one of Claims 1 to 4, wherein the fibre composition provided in step a) additionally comprises further fibres, selected from fibres of phenolic resins, polyesters, polyolefins, cellulose, aramids, polyetherketones, polyetherester-ketones, polyethersulfones, polyvinyl alcohol, lignin, pitch, and mixtures thereof.

6. Gas diffusion layer according to one of the preceding claims, wherein the fibre composition provided in step a) is subjected in step b) to a dry-laying method for producing a fibrous web.

7. Gas diffusion layer according to one of the preceding claims, wherein the water used in step c) for consolidating the fibrous web has a conductivity of at most 200 microsiemens/cm at 25°C, preferably of at most 150 microsiemens/cm at 25°C.

8. Gas diffusion layer according to one of the preceding claims, wherein the water used in step c) for consolidating the fibrous web is at least partly recycled.

9. Gas diffusion layer according to Claim 8, obtainable by a method wherein a fibrous web is consolidated by exposure to aqueous fluid jets to form a nonwoven, a wastewater stream is extracted from the treatment of the fibrous web, a setpoint value is specified for the conductivity of the wastewater stream, the actual value of the conductivity of the wastewater stream is determined, on attainment of a limiting value for the deviation of the actual value from the setpoint value, the wastewater stream is subjected at least partly to processing and/or to exchange with water of lower ionic concentration, and the wastewater stream is returned at least partly to the treatment of the fibrous web.

10. Gas diffusion layer according to one of the preceding claims, wherein the nonwoven obtained in step c) is subjected in step d) to a further consolidation by calendering.

11. Gas diffusion layer according to one of Claims 2 to 10, wherein the hydrophobizing agent f1) comprises at least one fluorine-containing polymer.

12. Gas diffusion layer according to one of Claims 2 to 11, wherein the conductivity-improving additive f2) is selected from metal particles, carbon black, graphite, graphene, carbon nanotubes (CNTs), carbon nanofibres, and mixtures thereof.

13. Gas diffusion layer according to one of Claims 2 to 12, obtainable by a method wherein the nonwoven, during or after the coating and/or impregnation with the hydrophobizing agent in step f1), is subjected to a thermal treatment.

14. Fuel cell comprising at least one gas diffusion layer as defined in one of Claims 1 to 13.

15. Nonwoven obtainable by a method which comprises
a) providing a fibre composition which comprises carbon fibres and/or precursors of carbon fibres,
b) subjecting the fibre composition provided in step a) to a method for producing a fibrous web,
c) consolidating the fibrous web by exposure to aqueous fluid jets to form a nonwoven, the water used having a conductivity of at most 250 microsiemens/cm at 25°C.

## Revendications

1. Couche de diffusion de gaz, pouvant être obtenue par un procédé, dans lequel
a) on met à disposition une composition de fibres, qui comprend des fibres de carbone et/ou des précurseurs de fibres de carbone,
b) on soumet la composition de fibres mise à disposition dans l'étape a) à un procédé de fabrication d'un voile de fibres,
c) on solidifie le voile de fibres par l'action de jets fluidiques contenant de l'eau en un non-tissé, l'eau utilisée présentant une conductibilité d'au plus 250 microsiemens/cm à 25°C,
d) on soumet le cas échéant le non-tissé obtenu dans l'étape c) à un traitement thermique et/ou mécanique pour le séchage et/ou une autre solidification,
e) dans le cas où la composition de fibres utilisée dans l'étape a) comprend des précurseurs de fibres de carbone, on soumet le non-tissé à une pyrolyse à une température d'au moins 1000°C.

2. Couche de diffusion de gaz selon la revendication 1, pouvant être obtenue par un procédé dans lequel on apprête en plus le non-tissé obtenu dans l'étape c), d) ou e) à l'aide d'au moins un additif (étape f)), de préférence choisi parmi les agents rendant hydrophobe f1), les additifs améliorant la conductibilité f2), d'autres additifs f3) et leurs mélanges.

3. Couche de diffusion de gaz selon la revendication 1 ou 2, pouvant être obtenue par un procédé dans lequel on revêt en plus le non-tissé obtenu dans l'étape c), d), e) ou f) par une couche microporeuse (étape g)).

4. Couche de diffusion de gaz selon l'une des revendications précédentes, la composition de fibres mise à disposition dans l'étape a) comprenant des précurseurs de fibres de carbone qui sont choisis parmi les fibres de polyacrylonitrile non oxydé, les fibres de polyacrylonitrile oxydé et leurs mélanges.

5. Couche de diffusion de gaz selon l'une des revendications 1 à 4, la composition de fibres mise à disposition dans l'étape a) contenant en plus d'autres fibres, choisies parmi les fibres en résines phénoliques, en polyesters, en polyoléfines, en cellulose, en aramides, en polyéthercétones, en polyétherestercétones, en polyéthersulfones, en poly(alcool vinylique), en lignine, en poix et leurs mélanges.

6. Couche de diffusion de gaz selon l'une des revendications précédentes, la composition de fibres mise à disposition dans l'étape a) étant soumise dans l'étape b) à un procédé de dépôt à sec pour la fabrication d'un voile de fibres.

7. Couche de diffusion de gaz selon l'une des revendications précédentes, l'eau utilisée dans l'étape c) pour la solidification du voile de fibres présentant une conductibilité d'au plus 200 microsiemens/cm à 25°C, de préférence d'au plus 150 microsiemens/cm à 25°C.

8. Couche de diffusion de gaz selon l'une des revendications précédentes, l'eau utilisée dans l'étape c) pour la solidification du voile de fibres étant au moins partiellement recyclée.

9. Couche de diffusion de gaz selon la revendication 8, pouvant être obtenue par un procédé dans lequel on solidifie un voile de fibres par l'action de jets fluidiques contenant de l'eau en un non-tissé, on évacue un flux d'eau résiduaire du traitement du voile de fibres, on définit une valeur seuil pour la conductibilité du flux d'eau résiduaire, on détermine la valeur réelle de la conductibilité du flux d'eau résiduaire, on soumet, après avoir atteint une valeur limite pour l'écart de la valeur réelle par rapport à la valeur seuil, le flux d'eau résiduaire au moins partiellement à un traitement et/ou à un échange avec de l'eau présentant une concentration en ions plus basse et on recycle au moins partiellement le flux d'eau résiduaire dans le traitement du voile de fibres.

10. Couche de diffusion de gaz selon l'une des revendications précédentes, le non-tissé obtenu dans l'étape c) étant soumis, dans l'étape d), à une solidification supplémentaire par calandrage.

11. Couche de diffusion de gaz selon l'une des revendications 2 à 10, l'agent rendant hydrophobe f1) contenant au moins un polymère contenant du fluor.

12. Couche de diffusion de gaz selon l'une des revendications 2 à 11, l'additif améliorant la conductibilité f2) étant choisi parmi les particules métalliques, la suie, le graphite, le graphène, les nanotubes de carbone (NTC), les nanofibres de carbone et leurs mélanges.

13. Couche de diffusion de gaz selon l'une des revendications 2 à 12, pouvant être obtenue par un procédé dans lequel on soumet le non-tissé pendant ou après le revêtement et/ou l'imprégnation par l'agent rendant hydrophobe dans l'étape f1) à un traitement thermique.

14. Pile à combustible, comprenant au moins une couche de diffusion de gaz telle que définie dans l'une des revendications 1 à 13.

15. Non-tissé, pouvant être obtenu par un procédé, dans lequel
a) on met à disposition une composition de fibres, qui comprend des fibres de carbone et/ou des précurseurs de fibres de carbone,
b) on soumet la composition de fibres mise à disposition dans l'étape a) à un procédé de fabrication d'un voile de fibres,
c) on solidifie le voile de fibres par l'action de jets fluidiques contenant de l'eau en un non-tissé, l'eau utilisée présentant une conductibilité d'au plus 250 microsiemens/cm à 25°C.
